# EUROPEAN PATENT SPECIFICATION

(11) **EP 2 596 293 B1**
(45) Date of publication and mention of the grant of the patent: **22.02.2017**
(21) Application number: 10752397.9
(22) Date of filing: 22.07.2010
(51) Int. Cl.: F24D 13/02

(54) **HEATING DEVICE**
HEIZVORRICHTUNG
DISPOSITIF DE CHAUFFAGE

(43) Date of publication of application: 29.05.2013
(73) Proprietor: Thermo Engineering S.r.l., 37141 Montorio (Verona) (IT)
(72) Inventor: STABILE, Aldo, I-37100 Verona (IT)
(74) Representative: Feltrinelli, Secondo Andrea
(86) International application number: PCT/IB2010/053349
(87) International publication number: WO 2012/010931

(56) References cited:
- WO-A2-2008/117146
- DE-A1- 1 565 841
- US-A- 4 656 339
- US-A- 5 004 895
- US-A- 5 180 900

## Description

### TECHNICAL FIELD OF THE INVENTION

The present invention concerns a heating device.

More specifically, the present invention concerns a heating device consisting of a flexible band to be installed under the surface of a wall or of a floor.

### STATE OF THE ART

Heating devices consisting of flexible bands are known that comprise laminar conductor means that diffuse heat into the environment through the heating that they undergo when they are crossed by a suitable current, this heating being known as the Joule effect. The aforementioned conductor means, usually in the form of sheets or bands of aluminium of low thickness, are associated with laminar insulating means, which also take care of protecting them from the outside environment and that give the flexible band the necessary mechanical strength to be correctly installed and last a long time.

Such heating devices are usually installed below the surface of a wall or of a floor, and they are then connected to the electrical mains.

Known devices usually operate at low voltage, i.e. with a voltage of less than 48 V, and the conductor means are sized to operate with such a voltage: they are usually of a width almost equal to that of the flexible band, and therefore they have a certain electrical resistance that, connected to a low voltage, is crossed by a current suitably determined and calculated to heat a room of certain dimensions.

This choice is mainly due to reasons of safety in operation, since it is known that low voltage power supply involves less risk of accidents and damage to the device itself and to people.

However, since in rooms there is the conventional mains voltage - which internationally is 230 V - it is necessary to associate the device with an electrical transformer, which takes care of supplying the conductor means of the device with low voltage, in a reliable and safe manner.

However, the transformer is a component whose cost has a substantial impact upon the overall production cost of the device, and also clearly on the installation and maintenance cost thereof, since it must be suitably installed, it can be subject to breaking, etc.. Therefore, in order to obtain a substantial reduction in the cost of the device, there is a need to completely eliminate the transformer, whilst still keeping the characteristics and performance of the device itself unchanged in terms of its operating efficiency and effectiveness, as well as in terms of safety.

DE1565841A1, US4656339A and US5004895A teach heating devices according to the prior art.

### PURPOSES OF THE INVENTION

The technical task of the present invention is therefore to devise a heating device that can be installed and made to work in rooms of any type without any transformer, i.e. with a simple and direct connection to the electrical mains.

In such a technical task, a purpose of the present invention is to make a device that can be installed in an effective and safe manner.

This purpose is accomplished by the heating device according to the attached claim 1.

The presence, in the same flexible band, of a plurality of conducting strips of lower width than that of the band and connected in series, makes it possible to obtain an electric circuit of resistance suitably calculated based on the supply voltage available and the optimal electric power to be dissipated into the room in the form of heat, without therefore needing an electrical transformer.

Moreover, the flexible band is extremely manageable, strong and easy to install in any room even by unspecialised personnel.

Further advantageous characteristics are described in the dependent claims.

### BRIEF DESCRIPTION OF THE DRAWINGS.

The characteristics of the invention will become clearer for any man skilled in the art from the following description and from the attached tables of drawings, given as a non-limiting example, in which:
- figure 1 is a detailed perspective view of the heating device at the first end of the flexible band;
- figure 2 is another perspective view, from a different angle, of the device at the first end of the flexible band, with the first terminal element partially dismounted;
- figure 3 is another perspective view of the device at the first end of the flexible band, with other components removed;
- figure 4 is a schematic perspective view of the electrical connection of the conducting strips;
- figure 5 is a cross section of the heating device at the second end of the flexible band;
- figure 6 is a perspective view of another embodiment of the heating device according to the invention, at the first end of the flexible band, with the first terminal element partially dismounted;
- figure 7 is another perspective view of the device of figure 6 at the first end of the flexible band, with other components removed;
- figure 8 is a schematic perspective view of the electrical connection of the conducting strips of the device of figures 6,7;
- figure 9 is a schematic perspective view of the electrical connection of the conducting strips of another embodiment of the device;
- figure 10 is a schematic perspective view of the electrical connection of the conducting strips of yet another embodiment of the device;
- figure 11 is a detailed and sectioned side view of one of the ends of the flexible band, in another embodiment of the device;
- figure 12 is a detailed and sectioned side view of one of the ends of the flexible band, in yet another embodiment of the device according to the invention.

### EMBODIMENTS OF THE INVENTION.

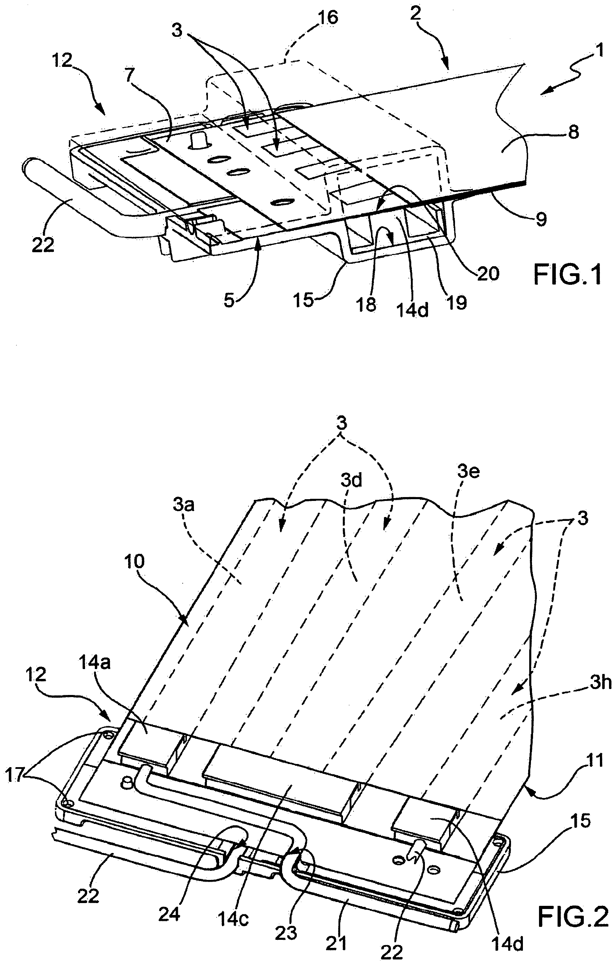

With reference to the attached figure 1, a heating device according to the present invention is wholly indicated with 1.

The heating device according to the present invention can be installed in any room, public or private, without any limitation, and it can be mounted under the surface of any wall or floor.

The device 1 comprises a flexible band, wholly indicated with 2, provided with laminar conductor means 3, which shall be described better hereafter. The laminar conductor means 3a,3b,3c,3d,3e,3f,3g,3h are directly connected to the electrical mains, thus supplied with normal mains voltage, and therefore they are crossed by current so as to diffuse the heat, by the Joule effect, in the room in which the device is installed, for example a bedroom, a lounge, etc..

The flexible band 2 also comprises laminar insulating means, wholly indicated with 4 and of the *per sé* known type, associated with the laminar conductor means 3 in the way that will be described hereafter.

The conductor means 3 comprise, in greater detail, a plurality of conducting strips 3a,3b,3c,3d,3e,3f,3g,3h of smaller width than that of the flexible band 2, electrically connected in series to one another, with the technical advantages that will become clear hereafter.

The conducting strips 3a,3b,3c,3d,3e,3f,3g,3h, in the embodiment described here, are eight in number, just as an example. Their number can of course be whatever in relation to the specific requirements, without any limitation.

The conducting strips 3a,3b,3c,3d,3e,3f,3g,3h, that are made from sheets of aluminium with a thickness of a few microns - for example 10-12 microns - are electrically connected in series to one another at the ends 5,6 of the flexible band 2.

The conducting strips 3a,3b,3c,3d,3e,3f,3g,3h are in overlapping sets of two inside the flexible band 2.

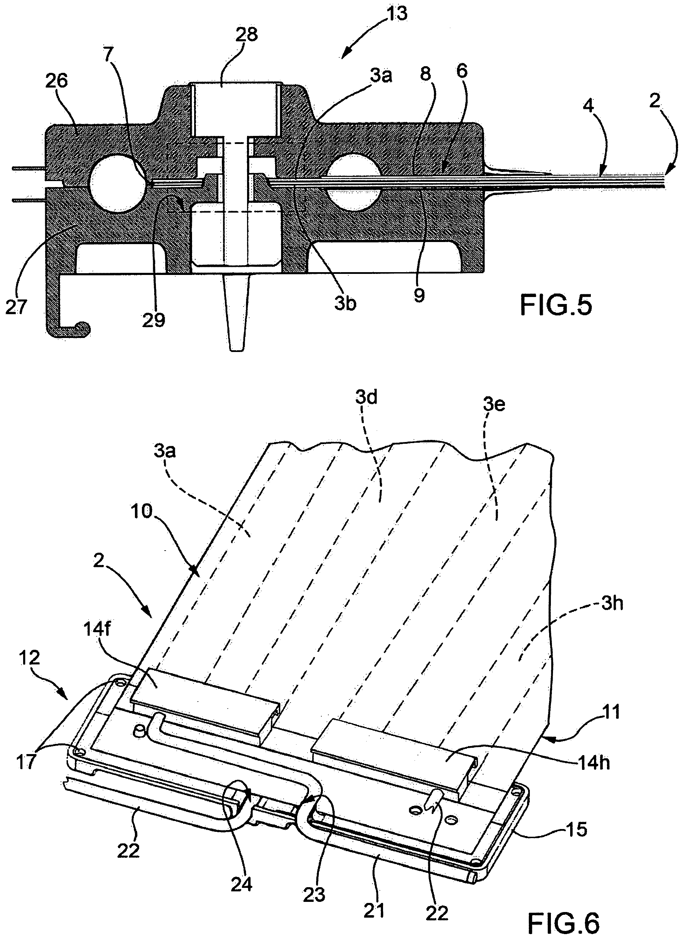

In order to obtain the necessary characteristics of electrical insulation and mechanical strength, the insulating laminar means 4 of the flexible band 2 comprise, in a *per sé* known way that can be seen for example in figure 5, a central sheet 7, for example of polymeric material or similar, on the two faces of which the conducting strips 3a,3b,3c,3d,3e,3f,3g,3h are arranged, parallel and in overlapping sets of two; on these strips, there are two further insulating sheets 8,9 that make the first outer face 10 and the second outer face 11 of the flexible band 2.

The central sheet 7 and the insulating sheets 8,9, as well as ensuring the optimal electrical insulation of the device, give the flexible band 2 the necessary mechanical strength to allow the device to be assembled. In order to carry out the installation of the latter, indeed, the flexible band 2 is laid out, for example, on the floor, and then is folded over on itself to make curves, so as to cover the overall surface of the room. The band 2, therefore, must withstand folds with very small radius of curvature without being damaged.

Each of the insulating sheets 7,8,9, in other embodiments, can in turn consists of overlapped sheets of different materials; there can be, outside and inside, other sheets or layers of other materials suitable for giving the band insulating properties, mechanical strength, protection from external agents, etc.

The device 1 comprises a first terminal element, wholly indicated with 12, for the electrical connection of the conducting strips 3a,3b,3c,3d,3e,3f,3g,3h, fixed at the first end 5 of the flexible band 2. The first terminal element 12 is illustrated, in various details, in figures 1,2,3.

Moreover, the device 1 comprises a second terminal element, wholly indicated with 13, for the electrical connection of the conducting strips 3a,3b,3c,3d,3e,3f,3g,3h fixed at the second end 6 of the flexible band 2. The second terminal element 13 is illustrated in the section of figure 5.

The first terminal element 12 comprises, in greater detail, a plurality of first conductor bodies 14a,14b,14c,14d,14e for the electrical connection of the conducting strips 3a,3b,3c,3d,3e,3f,3g,3h in series with one another, so that two overlapped strips are crossed by current going the opposite way to one another. In this way, there is almost total cancelling out of the electromagnetic field generated by the current that crosses the conducting strips 3a,3b,3c,3d,3e,3f,3g,3h: there is therefore no electromagnetic pollution in the room in which the device is installed.

The number, dimensions and arrangement of the first conductor bodies 14a,14b,14c,14d,14e will be described hereafter.

The first terminal element 12 comprises a first half-shell 15 and a second half-shell 16, fixed to one another with removable attachment means, for example screws engaged in holes 17. In this way, the first half-shell 15 and the second half-shell 16 surround the opposite first face 10 and second face 11, respectively, of the flexible band 2, at the first end 5.

The first conductor bodies 14a,14b,14c,14d,14e are housed in respective first seats 18, foreseen in the first half-shell 15 and in the second half-shell 16, as can be seen in figure 1.

The first conductor bodies 14a,14b,14c,14d,14e, in particular, consist of metallic blocks that have respective widened portions 19 that engage in the first seats 18, and have respective flat surfaces 20 for making contact with the conducting strips 3a,3b,3c,3d,3e,3f,3g,3h.

Two of the first conductor bodies 14a,14b,14c,14d,14e housed in the first terminal element 12 are connected to electrical power supply means, not represented in the figures, through electric cables 21,22 that are introduced into the first terminal element 12 itself through respective channels 23,24. In greater detail, the electric cables 21,22 are directly connected to the electrical mains of the room in which the heating device is installed.

The first and the second half-shell 15,16 of the first terminal element 12 are made, for example, from material like plastic, or another material of equivalent mechanical and electrical insulation characteristics.

The second terminal element 13 comprises a plurality of second conductor bodies 25a,25b,25c,25d for the electrical connection of the conducting strips 3a,3b,3c,3d,3e,3f,3g,3h to one another, so that two overlapped strips are crossed by current going the opposite way to each other, with the advantages described above of cancelling out of the electromagnetic field generated.

More specifically, the second terminal element 13 comprises two half-elements 26,27 fixed to one another with screws 28 so as to surround the opposite first face 10 and second face 11 of the flexible band 2 at the second end 6.

The second conductor bodies 25a,25b,25c,25d are housed in respective second seats 29 foreseen in the half-elements 26,27 as can be seen in figure 5. The second conductor bodies 25a,25b,25c,25d consist, for example, of metallic blocks.

The half-elements 26,27 of the second terminal element 13 are made, for example, from material like plastic, or another material of equivalent mechanical and electrical insulation characteristics.

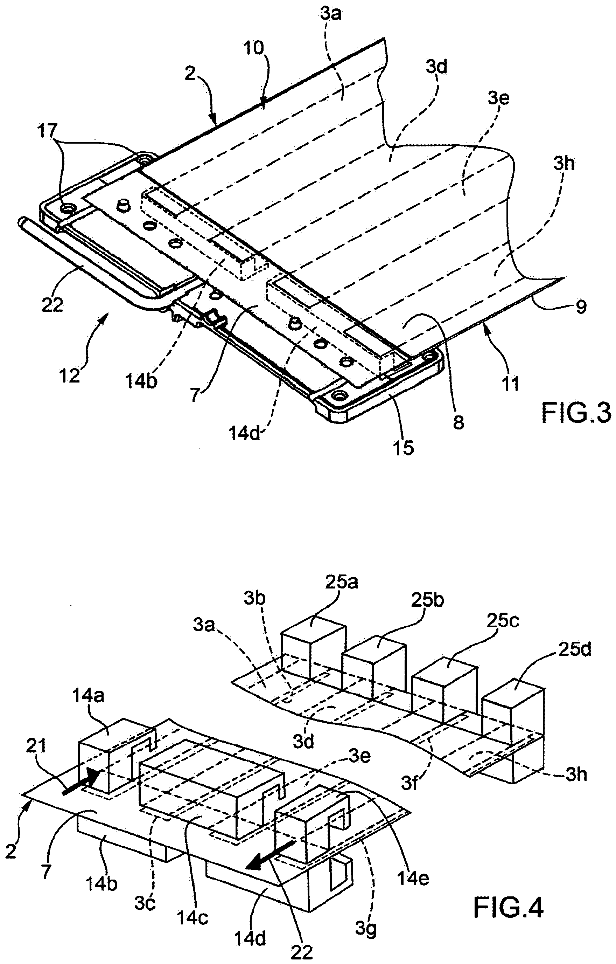

Figure 4 schematically illustrates the arrangement of the first conductor bodies 14a,14b,14c,14d,14e and of the second conductor bodies 25a,25b,25c,25d and their connection to the conducting strips 3a,3b,3c,3d,3e,3f,3g,3h, so as to obtain an electric circuit in which the directly overlapped strips are crossed by electric current going the opposite way.

In order to make such a connection, the insulating sheets 8,9 are partially removed at the respective terminal portions, so as to uncover the terminal ends of all of the strips 3a,3b,3c,3d,3e,3f,3g,3h.

A first conductor body 14a, i.e. the one arranged on the left in figure 4 and of equal width to that of a conducting strip, i.e. of the single type, is directly connected to one of the electric cables 21, as can also be seen in figure 2, which in figure 4 is schematised with an arrow. By selecting a conventional direction of flow of the electric current, it can be seen that the current therefore crosses the strip 3a and, through the second conductor body 25a, proceeds through the strip 3b, which is placed under the strip 3a. From here, the current passes through the first conductor body 14b, this time of the double type, to the strip 3c, and then, through the second conductor body 25b, to the strip 3d. Hereafter, the electrical connection is continued by the first double conductor body 14c, which connects the strip 3d to the strip 3e; the current then continues, through the second conductor body 25c, to the strip 3f, arranged below. Finally, in an intuitive manner, the current crosses the first conductor body 14d, of the double type, the strip 3g, the second conductor body 25d, the strip 3h and finally the first single conductor body 14e, to which the other of the electrical cables 22 is connected, this also being schematically represented as an arrow. The electric circuit is thus closed.

The conducting strips 3a, 3b, 3c, 3d, 3e, 3f, 3g, 3h, of substantially smaller width than that of the flexible band 2, therefore have a strength - which obviously depends upon the cross section of the strip itself - that is relatively high and suitable, with the mains power supply voltage, for determining an optimal thermal power, per square metre of surface, to give a feeling of comfort for the people that occupy the room in which the device is installed.

Purely as an example for clarifying purposes, let us consider that the electrical power necessary to heat a room to make it comfortable was estimated to be about 50 W per square metre.

As known, the electrical power is the product of the voltage by the electric current: since the voltage is mains voltage, the electrical current must be reduced to ensure the optimal power value. This result is obtained by using conducting strips 3a,3b,3c,3d,3e,3f,3g,3h of reduced width and suitable length, and therefore of high resistance.

In particular the length of the strips 3a,3b,3c,3d,3e,3f,3g,3h is selected and sized based on the surface of the room to be heated.

The overall number of strips 3a,3b,3c,3d,3e,3f,3g,3h included in one flexible band 2, since they are connected in series, is also selected in relation to the surface of the room to be heated, since the overall resistance of the device depends precisely upon the number of strips connected in series.

It has thus been seen how the invention achieves the proposed purposes.

The heating device according to the invention makes it possible, with a simple mains power supply, to supply the electrical power, to be dissipated in the room in the form of heat, which is optimal to give the feeling of comfort to the people present in the room in which it is installed.

This result is obtained using conducting strips of substantially smaller width than that of the flexible band, suitably sized to obtain a circuit of overall resistance suitable for dissipating the desired thermal power.

At the same time, however, the presence of a flexible support band of "standard" width, which is manageable, strong and insulating, makes it possible to install the device in a simple and effective manner in any room, even by unspecialised personnel.

Moreover, the electrical connection between the strips takes place through metallic blocks stably housed in respective seats: such a connection is therefore clean, reliable and without cables, clamps and other means that are awkward to mount and subject to wear over time.

Another embodiment of the device according to the invention is represented in figures 6,7,8.

In the description of this embodiment, just like in the relative drawings, the same reference numerals of the description of the previous embodiment are used to indicate the corresponding parts.

With respect to the embodiment described earlier, the present one differs in the method of connection of the conducting strips 3a,3b,3c,3d,3e,3f,3g,3h.

In greater detail, said conducting strips 3a,3b,3c,3d,3e,3f,3g,3h, in the present embodiment, are connected in parallel in sets of two.

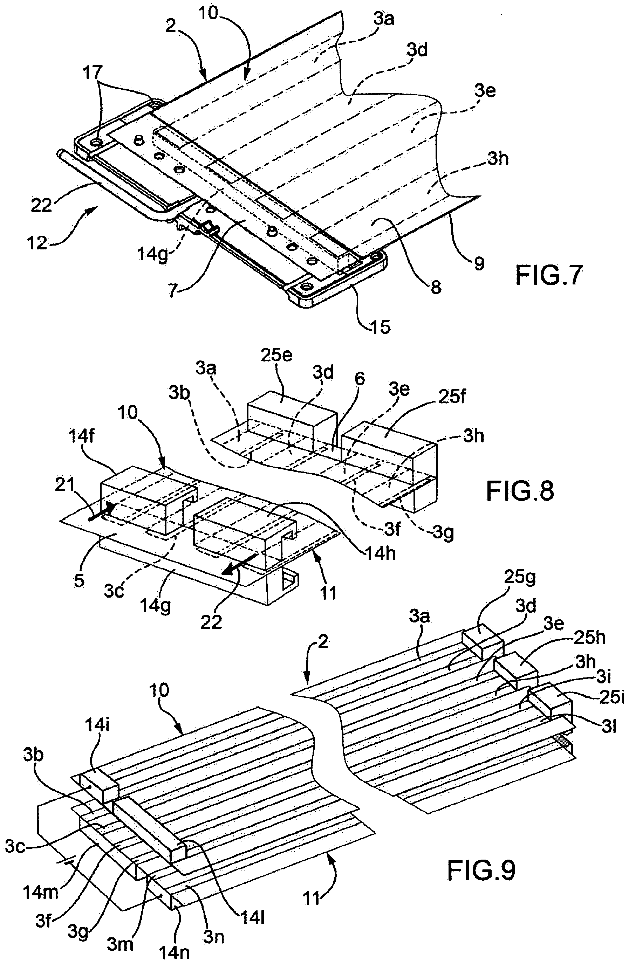

Indeed, as can be seen for example in the diagram of figure 8, the strips 3a and 3d, which are located directly adjacent on the same face of the flexible band, are connected in parallel through a first conductor body 14f at the first end 5 of the flexible band 2, on the first outer face 10 thereof.

In the same way, said strips 3a and 3d are connected in parallel at the second end 6 of the flexible band 2, again on the first outer face 10, through a second conductor body 25e. The same second conductor body 25e connects the two underlying strips 3b, 3c, at the second outer face 11 of the flexible band.

Said strips 3b,3c are in turn connected, at the first end 5, through a further second conductor body 14g, which extends even up to the subsequent strips 3f,3g, which thus are in turn connected in parallel.

The connection in parallel of said strips 3f,3g is completed, at the second end 6, through another second conductor body 25f; the latter also connects the remaining strips 3e,3h in parallel, which are also connected by a further first conductor body 14h.

The first conductor bodies 14f,14h are connected directly to the mains.

The solution of the connection in parallel of the strips 3a,3b,3c,3d,3e,3f,3g,3h makes it possible to obtain an equivalent resistance, of the entire electric circuit, which is substantially lower than that of the previous embodiment, in which the connection is, on the other hand, in series.

Obtaining a lower equivalent resistance makes it possible to obtain a greater current that passes through the circuit, and therefore a greater thermal power that can be dissipated into the surface unit.

The definition of the length of the flexible band 2, and therefore of the strips 3a,3b,3c,3d,3e,3f,3g,3h, makes it possible to determine with a certain degree of precision the thermal power that the band is able to supply. Considering the fact that the band 2 is usually arranged under the floor to heat a room of a certain area, it is possible to cut to size the band 2 necessary to obtain the desired thermal power per square metre, for example 50 W/m², as stated earlier. With respect to the previous embodiment, however, the present embodiment with the connections in parallel makes it possible to use less band for the same thermal power that can be obtained.

Installation is therefore faster, easier and more cost-effective, even for people untrained in the field.

As can also be seen in figures 6,7, the remaining components of the device - in other words mainly the first terminal element 12 and the second terminal element 13 - are substantially identical to those described in the previous embodiment. Since, however, there are first conductor bodies 14f,14g,14h and second conductor bodies 25e,25f of different dimension to those of the previous embodiment, correspondingly the first and second seats 18,29 foreseen in the first terminal element 12 and in the second terminal element 13 must consequently be sized so as to receive them.

It should also be noted that it is possible to standardise the devices to be placed on the market in relation to their length, i.e. so as to be able to satisfy the heating requirements of all rooms of the most common homes or buildings.

For example, there can be three different lengths of the flexible bands 2, which are able to supply the necessary thermal power per square metre for all rooms that are commonly found in buildings.

Such three standard lengths can obviously be combined in a modular fashion in order to meet any requirement, in an extremely practical and versatile manner.

Such bands 2, as described, can be provided with terminal connection elements 12,13 arranged at the ends 5,6, or else there can be intermediate connection elements, to be applied at certain points along the band 2 itself, to obtain other personalised methods of electrical connection, and yet other results.

Another embodiment of the device according to the invention is illustrated in figure 9.

In figure 9 the flexible band 2 is illustrated without the insulating sheets 8,9, for the sake of ease of understanding.

In this embodiment, the band 2 comprises six strips for each face 10,11, i.e. in total twelve strips: then the four strips 3i,3l,3m,3n represented in figure 9 are added.

The method of connection of the strips 3a-3n, i.e. the connection in parallel in sets of two, is exactly the same as described in the previous embodiment of figures 6,7,8, for which reason it will not be repeated in detail.

In order to make such a connection, further first conductor bodies 14i,14l,14m,14n and further second conductor bodies 25g,25h,25i are used, sized and arranged as illustrated intuitively in figure 9.

The presence of a greater number of strips 3a-3n makes it possible to obtain a greater versatility of use, since various electrical connections can be made between the individual strips 3a-3n, so as to obtain different equivalent resistances in relation to the different application requirements.

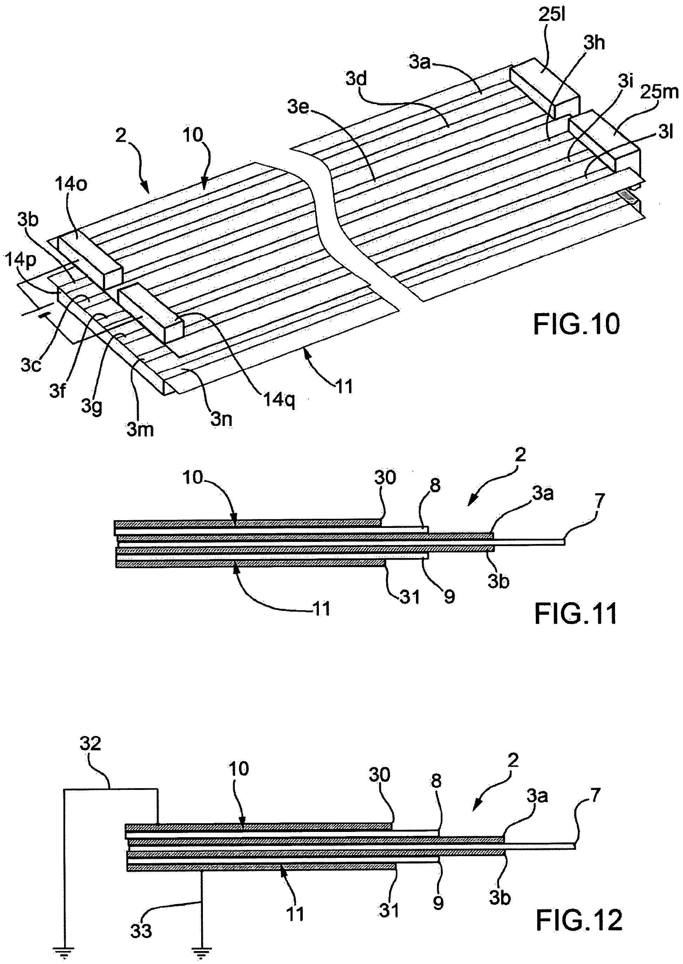

As confirmation of this, a further embodiment of the device according to the present invention is illustrated in figure 10.

In this embodiment, the band 2 is identical to the one of the previous embodiment - figure 9 - i.e. it is equipped, for every face 10,11, with six strips, for a total of twelve strips 3a-3n.

With respect to the previous embodiment, in this one of figure 10 only the electrical connections between the strips 3a-3n are different, so as to obtain a different equivalent resistance with respect to those of the previous embodiments.

In greater detail, the strips 3a-3n are connected, this time, in parallel in sets of three, as can clearly be seen in figure 10.

For this purpose, there are first conductor bodies 14o, 14p, 14q and second conductor bodies 251, 25m positioned and sized so as to carry out the desired method of connection, as illustrated in figure 10.

The equivalent resistance of the band 2 of the present embodiment is different from that of the previous embodiment.

More generally, the strips 3a-3n can be connected, at the ends 5,6 of the band 2, in parallel in groups of predefined number.

In another embodiment, not represented in the figures, the twelve strips 3a-3n can all be connected in series with one another, in a totally equivalent way to what is schematically illustrated in figure 4.

It is clear, therefore, that as the number of strips present in the band 2 increases, the possibilities of obtaining different equivalent resistances, and therefore different thermal powers able to be dissipated by a band 2, for the same length, increases. In this way the versatility of the device is further increased: one band 2, made with standardised technologies, can be used, thanks to the possibility of varying the methods of electrical connection between the strips 3a-3n, to obtain thermal powers per square metre that are even very different from one another. Thus, by suitably selecting the type of connection between the strips 3a-3n and the length of the band 2, devices are made with variable thermal power having a very large number of possibilities, so as to meet any possible requirement.

There can be other forms of connection, between the strips 3a-3n, consisting of different series-parallel combinations, according to the specific requirements. Another embodiment of the device is represented, in a detailed section thereof, in figure 11.

In particular, figure 11 illustrates the band 2 at one of its ends 5,6, irrespectively, with the various layers partially removed for the sake of ease of understanding.

With respect to the band 2 described in the previous embodiments, in the present one there are two metallic films 30,31 that at least partially or even completely cover the band 2 at the respective outer faces 10,11. The two metallic films 30,31 can be made, for example, from aluminium, or else from another metallic material with suitable properties.

With this provision, the band is, first of all, made fire-retardant, even when there is a flame in direct contact with the surface.

Secondly, since the heat emitted by the strips 3a-3n is not perfectly uniform in the transversal direction with respect to the band 2, precisely due to the discontinuities between conductor material and insulating material, the presence of the metallic films 30,31 makes it possible to make the diffusion of heat by the device more even and uniform.

Yet another embodiment of the device according to the present invention is illustrated, in a detailed section, in figure 12.

This embodiment is absolutely identical to the previous one of figure 11, and only differs in that the metallic films 30,31 are connected to earth through respective electrical connections 32,33.

Thanks to such a connection to earth, any accidental contact of metallic, liquid or other bodies with the films 30,31 determines the instantaneous actuation of the protections foreseen in electrical systems compliant with current legal requirements.

For example, if in the installation step of the device or in any subsequent maintenance or restructuring intervention, the metallic films 30,31 are touched by metallic bodies - for example tools or other - there is no danger to the workers, since the connection to the electrical mains is immediately interrupted. Furthermore, this advantage makes it possible to install the device even in locations where there is a large amount of water, such as swimming pools and the like: a possible spillage or leak of liquid towards the device causes the instant interruption of the connection to the electrical mains. This makes the device even more versatile and suitable for any type of application.

The present invention has been described according to preferred embodiments, but equivalent variants can be devised without departing from the scope of protection offered by the following claims.

## Claims

1. Heating device, comprising a flexible band (2) provided with laminar conductor means (3) crossed by current and suitable for diffusing heat into the environment and laminar insulating means (4) associated with said laminar conductor means (3), said conductor means (3) comprise a plurality of conducting strips (3a-3h;3a-3n), of smaller width than that of said flexible band (2), electrically connected to one another, **characterised in that** said conducting strips (3a-3h;3a-3n) are located in sets, each set including two overlapping strips, said heating device comprising a first terminal element (12) for the electrical connection of said conducting strips (3a-3h;3a-3n) fixed at a first end (5) of said flexible band (2) and a second terminal element (13) for the electrical connection of said conducting strips (3a-3h;3a-3n) fixed at the second end (6) of said flexible band (2) wherein said first terminal element (12) comprises a plurality of first conductor bodies (14a-14e;14f-14h;14i-14n;14o-14q) for the electrical connection of said conducting strips (3a-3h;3a-3n), and said second terminal element (13) comprises a plurality of second conductor bodies (25a-25d;25e,25f;25g-25i;25l,25m) for the electrical connection of said conducting strips (3a-3h;3a-3n) to one another so as to obtain an electrical circuit in which the directly overlapped strips are crossed by electric current going in the same way or in the opposite way to one another, wherein at least two of said first conductor bodies (14a-14e;14f-14h;14i-14n;14o-14q) housed in said first terminal element (12), or at least two of said second conductor bodies (25a-25d;25e,25f;25g-25i;25l,25m) housed in said second terminal element (13) are connected to electric power supply means (21,22), i.e. directly connected to electrical mains.

2. Heating device according to claim 1, wherein said conducting strips (3a-3h;3a-3n) are electrically connected in series with one another at the ends (5,6) of said flexible band (2).

3. Heating device according to claim 1, wherein said conducting strips (3a-3h;3a-3n) are electrically connected in parallel at the ends (5,6) of said flexible band (2).

4. Heating device according to the previous claim, wherein said conducting strips (3a-3h;3a-3n) are electrically connected in parallel in groups of predefined number at the ends (5,6) of said flexible band (2).

5. Heating device according to one of the previous claims, wherein said conducting strips (3a-3h;3a-3n) are electrically connected, at the ends (5,6) of said flexible band (2), according to series-parallel combinations.

6. Heating device according to claim 1, wherein said first terminal element (12) comprises a first and a second half-shell (15,16) fixed to one another so as to surround the opposing first face (10) and second face (11) of said flexible band (2) at said first end (5).

7. Heating device according to claim 1, wherein said first conductor bodies (14a-14e;14f-14h;14i-14n;14o-14q) are housed in respective first seats (18) foreseen in said first half-shell (15) and/or said second half-shell (16).

8. Heating device according to claim 6, wherein said second terminal element (13) comprises two half-elements (26,27) fixed to one another so as to surround the opposite first face (10) and second face (11) of said flexible band (2) at said second end (6).

9. Heating device according to claim 1, wherein said second conductor bodies (25a-25d;25e,25f;25g-25i;25l,25m) are housed in respective second seats (29) foreseen in said half-elements (26,27).

10. Heating device according to claim 6, wherein said flexible band (2) comprises, on at least one of said first outer face (10) and second outer face (11), at least one metallic film (30;31).

11. Heating device according to claim 8, wherein said flexible band (2) comprises two metallic films (30,31) on said first outer face (10) and on said second outer face (11), respectively.

12. Heating device according to claim 10 or 11, wherein said at least one metallic film (30, 31) is connected to earth through respective electrical connections (32, 33).

## Patentansprüche

1. Heizvorrichtung, umfassend ein flexibles Band (2), versehen mit stromdurchflossenen lamellierten Leitermitteln (3) und geeignet zur Abgabe von Wärme an die Umgebung, und mit lamellierten Isoliermitteln (4), die mit den besagten lamellierten Leitermitteln (3) verbunden sind, die besagten Leitermittel (3) eine Vielzahl von Leiterstreifen (3a-3h; 3a-3n) mit einer geringeren Breite als diejenige des besagten flexiblen Bandes (2) umfassen, die elektrisch miteinander verbunden sind, **dadurch gekennzeichnet, dass** die besagten Leiterstreifen (3a-3h; 3a-3n) in Sätzen angeordnet sind, wobei jeder Satz zwei sich überlappende Streifen enthält, die besagte Heizvorrichtung ein erstes Anschlusselement (12) für den elektrischen Anschluss der besagten Leiterstreifen (3a-3h; 3a-3n), befestigt an einem ersten Ende (5) des besagten flexiblen Bandes (2), und ein zweites Anschlusselement (13) für den elektrischen Anschluss der besagten Leiterstreifen (3a-3h; 3a-3n), befestigt an dem zweiten Ende (6) des besagten flexiblen Bandes (2), umfasst, worin das besagte erste Anschlusselement (12) eine Vielzahl von ersten Leiterkörpern (14a-14e; 14f-14h; 14i-14n; 14o-14q) für den elektrischen Anschluss der besagten Leiterstreifen (3a-3h; 3a-3n) und das besagte zweite Anschlusselement (13) eine Vielzahl von zweiten Leiterkörpern (25a-25d; 25e,25f; 25g-25i; 25l,25m) für den elektrischen Anschluss der besagten Leiterstreifen (3a-3h; 3a-3n) miteinander umfasst, um eine elektrische Schaltung zu erhalten, in der die sich direkt überlappenden Streifen in die gleiche Richtung oder entgegengesetzt zueinander von elektrischem Strom durchflossen werden, worin mindestens zwei der besagten ersten Leiterkörper (14a-14e; 14f-14h; 14i-14n; 14o-14q), die in dem besagten ersten Anschlusselement (12) untergebracht sind, oder mindestens zwei der besagten zweiten Leiterkörper (25a-25d; 25e, 25f; 25g-25i; 251, 25m), die in dem besagten zweiten Anschlusselement (13) untergebracht sind, mit elektrischen Stromversorgungsmitteln (21, 22) verbunden sind, d.h. direkt mit dem Stromnetz verbunden sind.

2. Heizvorrichtung nach Anspruch 1, worin die besagten Leiterstreifen (3a-3h; 3a-3n) an den Enden (5, 6) des besagten flexiblen Bandes (2) miteinander elektrisch in Reihe geschaltet sind.

3. Heizvorrichtung nach Anspruch 1, worin die besagten Leiterstreifen (3a-3h; 3a-3n) an den Enden (5, 6) des besagten flexiblen Bandes (2) elektrisch parallel geschaltet sind.

4. Heizvorrichtung nach dem vorangehenden Anspruch, worin die besagten Leiterstreifen (3a-3h; 3a-3n) an den Enden (5, 6) des besagten flexiblen Bandes (2) in Gruppen mit vorbestimmter Anzahl elektrisch parallel geschaltet sind.

5. Heizvorrichtung nach einem der vorangegangenen Ansprüche, worin die besagten Leiterstreifen (3a-3h; 3a-3n) an den Enden (5, 6) des besagten flexiblen Bandes (2) elektrisch gemäß Reihen-/Parallelkombinationen geschaltet sind.

6. Heizvorrichtung nach Anspruch 1, worin das besagte erste Anschlusselement (12) eine erste und eine zweite Halbschale (15, 16) umfasst, die aneinander befestigt sind, um die gegenüberliegende erste Fläche (10) und zweite Fläche (11) des besagten flexiblen Bandes (2) an dem besagten ersten Ende (5) zu umgeben.

7. Heizvorrichtung nach Anspruch 1, worin die besagten ersten Leiterkörper (14a-14e; 14f-14h; 14i-14n; 14o-14q) in entsprechenden ersten Aufnahmen (18) untergebracht sind, die in der besagten ersten Halbschale (15) und/oder in der besagten zweiten Halbschale (16) vorgesehen sind.

8. Heizvorrichtung nach Anspruch 6, worin das besagte zweite Anschlusselement (13) zwei Halbelemente (26, 27) umfasst, die aneinander befestigt sind, um die gegenüberliegende erste Fläche (10) und zweite Fläche (11) des besagten flexiblen Bandes (2) an dem besagten zweiten Ende (6) zu umgeben.

9. Heizvorrichtung nach Anspruch 1, worin die besagten zweiten Leiterkörper (25a-25d; 25e,25f; 25g-25i; 25l,25m) in entsprechenden zweiten Aufnahmen (29) untergebracht sind, die in den besagten Halbelementen (26, 27) vorgesehen sind.

10. Heizvorrichtung nach Anspruch 6, worin das besagte flexible Band (2) auf mindestens einer der besagten ersten Außenfläche (10) und zweiten Außenfläche (11) mindestens eine Metallschicht (30; 31) umfasst.

11. Heizvorrichtung nach Anspruch 8, worin das besagte flexible Band (2) zwei Metallschichten (30, 31) auf der jeweilig besagten ersten Außenfläche (10) und auf der besagten zweiten Außenfläche (11) umfasst.

12. Heizvorrichtung nach Anspruch 10 oder 11, worin die mindestens eine Metallschicht (30, 31) durch jeweilige elektrische Verbindungen (32, 33) geerdet ist.

## Revendications

1. Dispositif de chauffage, comprenant une bande flexible (2) dotée d'un moyen conducteur laminaire (3) traversé par le courant et adapté pour diffuser la chaleur dans l'environnement et un moyen isolant laminaire (4) associé audit moyen conducteur laminaire (3), ledit moyen conducteur (3) comprenant une pluralité de bandes conductrices (3a-3h; 3a-3n), de largeur inférieure à celle de ladite bande flexible (2), raccordées électriquement les unes aux autres, **caractérisé en ce que** lesdites bandes conductrices (3a-3h; 3a-3n) sont positionnées par ensembles, chaque ensemble comprenant deux bandes chevauchantes, ledit dispositif de chauffage comprenant un premier élément d'extrémité (12) pour le raccordement électrique desdites bandes conductrices (3a-3h; 3a-3n) fixé à une première extrémité (5) de ladite bande flexible (2) et un deuxième élément d'extrémité (13) pour le raccordement électrique desdites bandes conductrices (3a-3h; 3a-3n) fixé à la deuxième extrémité (6) de ladite bande flexible (2), dans lequel ledit premier élément d'extrémité (12) comprend une pluralité de premiers corps conducteurs (14a-14e; 14f-14h; 14i-14n; 14o-14q) pour le raccordement électrique desdites bandes conductrices (3a-3h; 3a-3n), et ledit deuxième élément d'extrémité (13) comprend un pluralité de deuxième corps conducteurs (25a-25d; 25e,25f; 25g-25i; 251,25m) pour le raccordement électrique desdites bandes conductrices (3a-3h; 3a-3n) les unes aux autres de façon à obtenir un circuit électrique dans lequel les bandes se chevauchant directement sont traversées par courant électrique allant dans la même direction ou dans des directions opposées l'une à l'autre, dans lequel au moins deux desdits premiers corps conducteurs (14a-14e; 14f-14h; 14i-14n; 14o-14q) logés dans ledit premier élément d'extrémité (12), ou au moins deux desdits deuxièmes corps conducteurs (25a-25d; 25e,25f; 25g-25i; 251,25m) logés dans ledit deuxième élément d'extrémité (13) sont raccordés à des moyens d'alimentation électrique (21, 22), c'est-à-dire directement raccordés au réseau électrique.

2. Dispositif de chauffage selon la revendication 1, dans lequel lesdites bandes conductrices (3a-3h; 3a-3n) sont raccordées électriquement en série les unes aux autres aux extrémités (5, 6) de ladite bande flexible (2).

3. Dispositif de chauffage selon la revendication 1, dans lequel lesdites bandes conductrices (3a-3h; 3a-3n) sont raccordées électriquement en parallèle aux extrémités (5, 5,6) de ladite bande flexible (2).

4. Dispositif de chauffage selon la revendication précédente, dans lequel lesdites bandes conductrices (3a-3h; 3a-3n) sont raccordées électriquement en parallèle en groupes d'un nombre prédéfini aux extrémités (5, 6) de ladite bande flexible (2).

5. Dispositif de chauffage selon l'une des revendications précédentes, dans lequel lesdites bandes conductrices (3a-3h; 3a-3n) sont raccordées électriquement, aux extrémités (5, 6) de ladite bande flexible (2), selon des combinaisons série-parallèle.

6. Dispositif de chauffage selon la revendication 1, dans lequel ledit premier élément d'extrémité (12) comprend une première et une deuxième moitié d'enveloppe (15,16) fixées l'une à l'autre de façon à entourer les opposées première face (10) et deuxième face (11) de ladite bande flexible (2) à ladite première extrémité (5).

7. Dispositif de chauffage selon la revendication 1, dans lequel lesdits premiers corps conducteurs (14a-14e; 14f-14h; 14i-14n; 14o-14q) sont logés dans des premiers sièges (18) respectifs prévu dans ladite première moitié d'enveloppe (15) et/ou ladite deuxième moitié d'enveloppe (16).

8. Dispositif de chauffage selon la revendication 6, dans lequel ledit deuxième élément d'extrémité (13) comprend deux demi-éléments (26, 27) fixés l'un à l'autre de façon à entourer les opposées première face (10) et deuxième face (11) de ladite bande flexible (2) à ladite deuxième extrémité (6).

9. Dispositif de chauffage selon la revendication 1, dans lequel lesdits deuxièmes corps conducteurs (25a-25d; 25e,25f; 25g-25i; 251,25m) sont logés dans des deuxièmes sièges (29) respectifs prévus dans lesdits demi-éléments (26, 27).

10. Dispositif de chauffage selon la revendication 6, dans lequel ladite bande flexible (2) comprend, sur au moins l'une desdites première face extérieure (10) et deuxième face extérieure (11), au moins un film métallique (30; 31).

11. Dispositif de chauffage selon la revendication 8, dans lequel ladite bande flexible (2) comprend deux films métalliques (30, 31) sur ladite première face extérieure (10) et sur ladite deuxième face extérieure (11), respectivement.

12. Dispositif de chauffage selon la revendication 10 ou 11, dans lequel ledit au moins un film métallique (30, 31) est mis à la terre par l'intermédiaire de raccordements électriques (32, 33) respectifs.
